# EUROPEAN PATENT APPLICATION

(11) **EP 3 340 145 A1**
(43) Date of publication of application: **27.06.2018**
(21) Application number: 16206458.8
(22) Date of filing: 22.12.2016
(51) Int. Cl.: G06Q 20/32

(54) **METHOD OF DETERMINING CROWD DYNAMICS**

(71) Applicant: Mastercard International Incorporated, Purchase NY 10577 (US)
(72) Inventor: LYNCH, Richard, Kilmallock (IE)
(74) Representative: Gill Jennings & Every LLP

(57) **Abstract**

A method of determining crowd dynamics of a population of mobile device users is disclosed. A plurality of transaction authorization requests 132;134;136 identifying payment cards 122;124;126 are received. For each transaction authorization request, a mobile device 112;114;116 associated with the payment card is identified. A request for location data is sent to the mobile device 112;114;116. Location data 212;214;216 is received from the mobile device in response to the request for location data. The location data is associated with the respective transaction authorization request to create a user history record 232;234;236. The user history records corresponding to each of the plurality of transaction authorization requests are processed to generate a characteristic of crowd dynamics based on information relating to the behaviour of the population.

## Description

The present invention relates to a method and computer system for determining crowd dynamics of a population of mobile device users.

### BACKGROUND

It is often beneficial to characterize and predict the movements and behaviour of large groups of people. For example, when determining how to allocate certain resources, such as public transport resources or policing resources, it may be beneficial to identify regions with large concentrations of people and to predict the future movements of those people. This is particularly desirable on occasions where the movements of a group of people differs from typical daily patterns; the resource planning for a Black Friday or Christmas week shopping event in New York city, for example, is different to than that of a normal work day.

There are no known methods or apparatuses for gathering information allowing the movements and behaviours of a large group of people to be characterized or predicted. Such a system is needed to determine, for example, how to allocate resources in a population.

### SUMMARY OF INVENTION

In an aspect of the disclosure there is provided a method of determining crowd dynamics of a population of mobile device users, the method comprising: receiving a plurality of transaction authorization requests, wherein each transaction authorization request respectively identifies a payment card; for each transaction authorization request: identifying a mobile device associated with the payment card identified by the transaction authorization request and sending a request for location data to the mobile device; receiving location data, from the mobile device in response to the request for location data sent to that mobile device, relating to the current location of that mobile device; and associating the location data with the respective transaction authorization request to create a user history record; and processing the user history records corresponding to each of the plurality of transaction authorization requests to generate a characteristic of crowd dynamics based on information relating to the behaviour of the population.

The above method allows location data relating to a large number of users to be gathered and processed to establish the movements of a population in real time and to generate predictions regarding the population at future times. By sending location data requests to mobile devices based on transaction authorization requests, a framework is provided for obtaining location data from users at regular intervals where the location data can be verifiably assigned to a single member of a population. By associating the location data with transaction authorization requests, further information regarding the behaviour of the population is established, which can be used to generate more complex crowd dynamic characteristics than location data alone.

Preferably, the characteristic of crowd dynamics is population density data indicating the spatial density of the population at the current time. By generating population density data, areas in which resources are likely to be in high demand can be easily identified.

Preferably, the characteristic of crowd dynamics is predicted population density data indicating the spatial density of the population at a future time. By predicting future population density data, it is possible to predict areas in which there is likely to be a high demand for resources at a future time so that resources can be allocated accordingly.

Preferably, the method comprises further processing the population density data indicating the spatial density of population at the current time according to a model that predicts how population densities vary over time in order to produce predicted population density data indicating the spatial density of the population at a future time.

Preferably, the characteristic of crowd dynamics indicates a predicted number of people using a certain transport route. By predicting the number of people using a certain transport route, resources along that transport route can be allocated accordingly; for example, by providing additional transportation capacity.

Preferably, processing the user history records corresponding to each of the plurality of transaction authorization requests comprises providing a crowd dynamics engine with an input corresponding to the user history records and a further input corresponding to data characterizing the behaviour of previous crowds, thus allowing the crowd dynamics engine to compare the population with previous crowds to predict a future behaviour of the population based on the behaviour of a previous crowd. By comparing a population with previous crowds, the behaviour of a current crowd may be predicted empirically.

Preferably, processing the user history records corresponding to each of the plurality of transaction authorization requests comprises providing a crowd dynamics engine with an input corresponding to the user history records and a further input corresponding to data indicating average walking speeds. This allows the crowd dynamics engine to quantify a likely rate at which a crowd is likely to disperse.

Preferably, processing the user history records corresponding to each of the plurality of transaction authorization requests comprises providing a crowd dynamics engine with an input corresponding to the user history records and a further input corresponding to an algorithm that models how crowd densities evolve over time. This allows the crowd dynamics engine to predict a future crowd state based on user data corresponding to a current crowd state.

Preferably, processing the user history records corresponding to each of the plurality of transaction authorization requests comprises providing a crowd dynamics engine with an input corresponding to the user history records and a further input corresponding to transport routes in a certain geographical region. This allows the crowd dynamics engine to predict likely future movements based on known transport routes.

Preferably, processing the user history records corresponding to each of the plurality of transaction authorization requests comprises providing a crowd dynamics engine with an input corresponding to the user history records and a further input corresponding to data providing an estimate of the proportion of a people in a region for which user history records have been obtained. This allows the crowd dynamics engine to estimate a characteristic for all of the people in a region based on data gathered for a sub-group of the people in that region.

Preferably, the characteristic of crowd dynamics is updated in real time by generating a new characteristic of crowd dynamics each time a new user history record is created.

Preferably, the method comprises further processing the characteristic of crowd behaviour to generate a recommendation of how to allocate resources in a population, and providing the recommendation to a provider of the resources. By generating a recommendation of how to allocate resources in a population, resources can be efficiently allocated to meet requirements of the population.

Preferably, processing the user history records corresponding to each of the plurality of transaction authorization requests comprises filtering the user history records to remove records corresponding to transactions with a value below a predetermined threshold amount or above a predetermined threshold amount.

Preferably, processing the user history records corresponding to each of the plurality of transaction authorization requests comprises filtering the user history records to remove all records apart from user history records associated with payments made to a specified class of business entity.

In a second aspect of the disclosure, a computer system is provided for performing the method of the first aspect, the computer system comprising: a first communication node for receiving the plurality of transaction authorization requests; a second communication node for communicating wirelessly with the plurality of mobile devices; a first database having stored thereon a plurality of card-to-to-device records identifying mobile devices associated with the payment cards; and a crowd dynamics engine configured to process the user history records corresponding to each of the plurality of transaction authorization requests to generate a characteristic of crowd dynamics based on information relating to the behaviour of the population.

In a third aspect of the disclosure a system is provided for performing the method of the first aspect, the system comprising: the computer system of the second aspect; and a plurality of mobile devices.

Preferably, each of the mobile devices comprises a positioning system configured to generate location data corresponding to the current location of the mobile device.

In a fourth aspect of the disclosure, there is provided a computer readable medium containing instructions which when executed cause a computer to perform a method of determining crowd dynamics of a population of mobile device users, the method comprising the steps of: receiving a plurality of transaction authorization requests, wherein each transaction authorization request respectively identifies a payment card; for each transaction authorization request: identifying a mobile device associated with the payment card identified by the transaction authorization request and sending a request for location data to the mobile device; receiving location data, from the mobile device in response to the request for location data sent to that mobile device, relating to the current location of that mobile device; and associating the location data with the respective transaction authorization request to create a user history record; and processing the user history records corresponding to each of the plurality of transaction authorization requests to generate a characteristic of crowd dynamics based on information relating to the behaviour of the population.

### BRIEF DESCRIPTION OF THE FIGURES

Figure 1 is a schematic block representation of an example of a system according to the present disclosure, the system comprising a network in communication with a plurality of mobile devices.
Figure 2 is a schematic representation of data structures according to examples of the disclosure.
Figure 3 is a flow diagram showing steps that can be undertaken in an example of the disclosure.

### DETAILED DESCRIPTION

The present disclosure comprises a method in which payments made by card holders trigger a data gathering process performed by a payment network. Also provided is a computer system configured to perform the method.

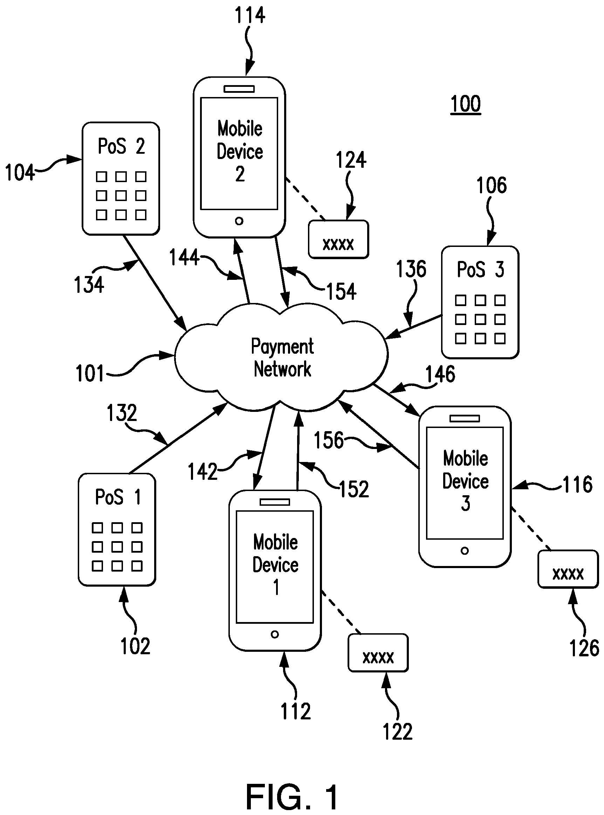

Figure 1 shows a schematic representation of a system 100 for use in examples of the present disclosure. A payment network 101 is in wired or wireless communication with a plurality of point-of-sale terminals 102;104;106 and a plurality of mobile devices 112;114;116. Each mobile device 112;114;116 comprises a positioning system such as a geolocation device or global positioning device that allows the mobile device to determine location data, such as a street name or geographical coordinates indicating the current location of the mobile device.

Each mobile device 112;114;116 is associated by the network 101 with a payment card 122;124;126. Three point-of-sale terminals and three mobile devices are shown in Figure 1, though the skilled person shall understand that the system may comprise an arbitrary number of mobile devices and point-of-sale terminals. None of the mobile devices 112;114;116 is intrinsically linked to a given point-of-sale terminals 102;104;106 and there may be a different number of point-of-sale terminals 102;104;106 and mobile devices.

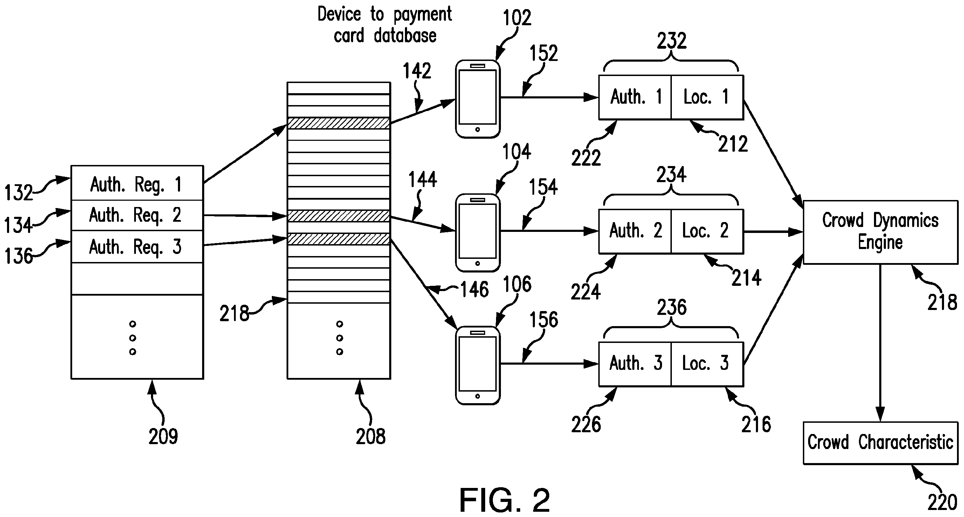

As shown schematically with reference to Figure 2, the network 101 has access to a number of databases, including a card-to-device database 208 on which a plurality of card-to-device record 214 are stored. Each card-to-device record 214 indicates that a given payment card 122;124;126 is associated with a given mobile device 112;114;116. Preferably, the card-to-device record 214 comprises card identification information that is included in a standardized payment authorization request message, such as a primary account number (PAN) formatted in accordance with the ISO 8583 messaging standard. Preferably, the card-to-device record 214 also comprises mobile device identification information that includes an address which the network 101 can use to send a wireless communication to the mobile device 112;114;116.

When a cardholder initiates a payment transaction using a payment card 122;124;126, or credentials associated with a payment card, the network 101 obtains location data corresponding to the location of the mobile device 112;114;116 associated with the payment card 122;124;126 and forms a history record 232 comprising the location data and authorization data 219 relating to the payment transaction. This is done through a history record creating process, which is outlined below.

The credentials associated with a payment card may be indicated or provided by a mobile device suitable for use as a payment device, such as a mobile phone, table or wearable computer device to which the payment card has been provisioned. In some examples, the payment transaction is initiated through the same mobile device from which location data is obtained.

When a cardholder initiates a payment transaction at a point-of-sale terminal 102;104;106 belonging to a merchant, an authorization request message 132;134;136 is sent from the point-of-sale terminal 102;104;106 to a payment network 101 via an acquiring institution (not shown). The authorization request message 132;134;136 is typically formatted according to a transaction messaging standard, such as the ISO 8583 messaging standard, and comprises a number of fields that are formatted according to the requirements of the messaging standard and include data that identifies details of the transaction, including the PAN of the payment card 122;124;126, a merchant identifier, date, currency and transaction amount.

In some examples the payment transaction is initiated at a payment portal that communicates with the payment network via a payment gateway.

Upon receiving the authorization request message 132;134;136, in addition to performing standard payment processing procedures, the network 101 identifies a mobile device 112;114;116 associated with the payment card 122;124;126. This is done by accessing the card-to-device database 208 to retrieve a card-to-device record 214 comprising data identifying the payment card 122;124;126 and an associated mobile device 112;114;116. In some examples, the card-to-device record 214 is obtained by searching the card-to-device database 208 for a card-to-device record 214 comprising the PAN identified in the authorization request message 132;134;136.

Upon identifying the mobile device 112;114;116 associated with the payment card 122;124;126, the network 101 sends a location request message 132;134;136 to the mobile device 112;114;116 to request location data identifying the current location of the mobile device 112;114;116.

Upon receiving the location request message 142;144;146, the mobile device 112;114;116 uses a positioning system to determine a set of location data 212;214;216 that identify its current location. In some examples, the location data 212;214;216 data may comprise geographical coordinates or an address (such as street number, street name, and postal/ZIP code). The mobile device 112;114;116 then sends a location data message 152;154;156 comprising the location data 216;217;218 to the network 101 in response to the location request message 132;134;136.

Upon receiving the location data message 152;154;156 from the mobile device 112;114;116, the network 101 combines authorization data 222;224;226 extracted from the authorization request message 132;134;136 with the location data 216;217;218 to create a history record 232;234;236. In general, the history record 232;234;236 may not include all of the information included in the authorization message 132;134;136 and may, for example, only include the transaction amount or the merchant identifier.

In the method of the present disclosure, the above history record creation process is performed in relation to a plurality of payment transactions made using details of a plurality of payment cards 122;124;126, each of which is associated with a mobile device 112;114;116. Each payment card may be used in a plurality of payment transactions, for each of which a new history record 232;234;236 is created.

As each of the authorization request messages 132;134;136 relating to the plurality of payment transactions is received, the authorization request messages 132;134;136 may be stored to an authorization request database 209. The authorization request messages 132;134;136 in the database may then be processed in parallel or in series according to the history record creation process to create a history record 232;234;236 for each payment transaction

By repeated application of the history record creation process for each payment transaction, a large number of history records is generated.

The user history records 232;234;236 created are processed by a crowd dynamics engine 210 of the network 101. The crowd dynamics engine 210 processes the user history records 232;234;236 in order to generate a characteristic 220 of population of cardholders/mobile device users. The crowd dynamics engine 210 may process the user history records 232;234;236 to generate a particular crowd characteristic 220 according to a chosen computational model.

The crowd dynamics engine 210 can generate crowd characteristics 220 that are updated in real time based on creation of new history records. Alternatively, the crowd dynamics engine 210 may wait until a predetermined set of history records has been created, after which the set of records is processed to generate a crowd characteristic 220.

In one example, the crowd characteristic 220 may comprise a population density data indicating of the number of cardholders/mobile device users in different geographical regions. The population density data may be in the form of a population density map indicating the number of cardholders/mobile device users in different geographical regions.

In another example, the crowd characteristic 220 may comprise a population density distribution map including an estimate of the total number of people in different geographical regions by extrapolating the number of cardholders/mobile device users in different geographical regions according to a predetermined model.

In another example, the crowd characteristic 220 may comprise a predicted population density distribution map comprising an indication of the number of people in different geographical regions at a future time. The predicted population density distribution map may be generated from a current population density distribution map using a model that predicts how population densities evolve over time.

In some examples, the models and algorithms that are used by the crowd dynamics engine 210 to generate the crowd characteristic 220 may generate a prediction of the future crowd behaviour based on earlier history records. For example, crowd dynamics engine 210 may identify that user history records 232;234;236 as being similar to user history records generated by another crowd on a previous occasion; the crowd dynamics engine 210 may then predict that the state of current crowd will evolve in a similar manner to the earlier crowd.

In other examples, the models and algorithms that are used by the crowd dynamics engine 210 to generate the crowd characteristic 220 may generate a prediction of the future crowd behaviour using a model that predicts crowd density evolution over time. For example, in some examples the crowd density evolution may be approximated using a diffusion model.

In some examples, the crowd dynamics engine 210 may be provided with one or more inputs in addition to user history records in order to characterize behaviour of the crowds. For example, the crowd dynamics engine 210 may be provided with data indicating average human walking speeds, driving speeds or other rates of dispersal, thus allowing the crowd dynamics engine 210 to quantify how quickly a crowd may disperse. In some examples, the crowd dynamics engine 210 may be provided with data indicating transport routes in a geographical area (e.g. in New York City), thus allowing the crowd dynamics engine 210 to identify likely future movement patterns of the population.

Due to the combination of authorization data and location data in the history records 232, the crowd dynamics engine 210 may be configured to make sophisticated predictions regarding the movements of a population. For example, the history records 232;234;236 may indicate that a large number of cardholders/mobile device users in a given location have performed a payment transaction in order to embark on a public transport system. From this information, a predetermined model may form a prediction of a direction or location towards which the cardholders/mobile device users are travelling.

In some examples, the crowd dynamics engine 210 may filter the history records 232;234;236 so that only a subset of the user history records are processed.

The user history records 232;234;236 could be filtered to only include transactions in a certain geographical region. For example, the user history records 232;234;236 may be filtered to include only transactions that occurred on Manhattan. This allows the crowd dynamics engine 210 to focus on a geographical region of particular interest.

In another example, the user history records 232;234;236 may be filtered to only include records associated with payments over or under a predetermined amount. For example, only user history records 232;234;236 associated with payments over $100 may be removed. This allows the crowd dynamics engine 210 to identify sub-groups of the population to more accurately predict movements based on previously known movements of similar sub-groups. Other filters may be applied to identify similar groups of individuals based on spending patterns or similar types of transactions.

After the crowd characteristic has been generated, this may be provided to a provider of resources in order to make a resource allocation decision.

For example, if the crowd characteristic includes a prediction of where a large crowd is likely to occur at a future time, this information may be provided to a police force so that they may allocate adequate resources to that area for dealing with the crowd.

In another example, if the crowd characteristic includes a prediction that a large number of people will move from one location to another, this information may be provided to public transport service providers in order to ensure that sufficient transportation capacity is provided to allow the crowd to move safely.

In some examples, the crowd dynamics engine 210 generates a recommendation, which is provided directly to a provider of resources. For example, the crowd dynamics engine 210 may recommend that more police are deployed on a certain street, or that an additional train is provided along a certain route.

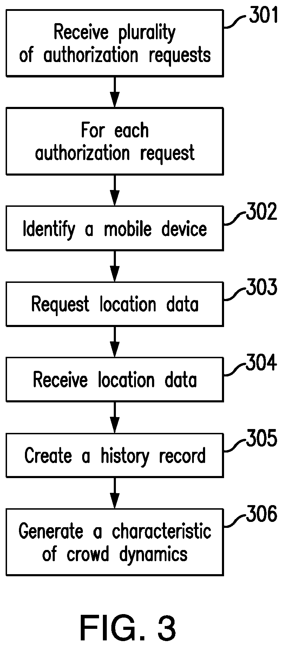

Figure 3 shows a flow diagram illustrating steps performed by the network 101 in the method above.

In step 301, the network 101 receives a plurality of transaction authorization requests 132;134;136, wherein each transaction authorization request respectively identifies a payment.

Steps 302-305 take place for each authorization request 132;134;136 received in step 301.

In step 302, the network 101 identifies a mobile device 112;114;116 associated with the payment card 122;124;126 identified by the transaction authorization request 132;134;136.

In step 303, the network 101 sends a request for location data 216;217;218 to the mobile device 112;114;116.

In step 304, the network 101 receives location data 216;217;218 from the mobile device 112;114;116 in response to the request for location data sent to that mobile device 112;114;116.

In step 305, the network 101 associates the location data 216;217;218 with the respective transaction authorization request to create a user history record 232;234;236.

In step 306, the network 101 processes the user history records 232;234;236 generated in step 305 (for each of the plurality of transaction authorization requests) to generate a characteristic of crowd dynamics based on information relating to the behaviour of the population

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A method of determining crowd dynamics of a population of mobile device users, the method comprising:
receiving a plurality of transaction authorization requests, wherein each transaction authorization request respectively identifies a payment card;
for each transaction authorization request:
identifying a mobile device associated with the payment card identified by the transaction authorization request and sending a request for location data to the mobile device;
receiving location data, from the mobile device in response to the request for location data sent to that mobile device, relating to the current location of that mobile device; and
associating the location data with the respective transaction authorization request to create a user history record;
and processing the user history records corresponding to each of the plurality of transaction authorization requests to generate a characteristic of crowd dynamics based on information relating to the behaviour of the population.

2. The method of claim 1, wherein the characteristic of crowd dynamics is population density data regarding the spatial density of the population at the current time.

3. The method of claim 1, wherein the characteristic of crowd dynamics is predicted population density data regarding the spatial density of the population at a future time.

4. The method of claim 2, comprising further processing the population density data indicating the spatial density of population at the current time according to a model that predicts how population densities vary over time in order to produce predicted population density data indicating the spatial density of the population at a future time.

5. The method of claim 1, wherein the characteristic of crowd dynamics indicates a predicted number of people using a certain transport route.

6. The method of any preceding claim, wherein processing the user history records corresponding to each of the plurality of transaction authorization requests comprises providing a crowd dynamics engine with an input corresponding to the user history records and a further input corresponding to data characterizing the behaviour of previous crowds, thus allowing the crowd dynamics engine to compare the population with previous crowds to predict a future behaviour of the population based on the behaviour of a previous crowd.

7. The method of any preceding claim, wherein processing the user history records corresponding to each of the plurality of transaction authorization requests comprises providing a crowd dynamics engine with an input corresponding to the user history records and a further input corresponding to an algorithm that models how crowd densities evolve over time.

8. The method of any preceding claim, wherein processing the user history records corresponding to each of the plurality of transaction authorization requests comprises providing a crowd dynamics engine with an input corresponding to the user history records and a further input corresponding to transport routes in a certain geographical region.

9. The method of any preceding claim, wherein processing the user history records corresponding to each of the plurality of transaction authorization requests comprises providing a crowd dynamics engine with an input corresponding to the user history records and a further input corresponding to an estimated population of a given region.

10. The method of any preceding claim, comprising further processing the characteristic of crowd behaviour to generate a recommendation of how to allocate resources in a population, and providing the recommendation to a provider of the resources.

11. The method of any preceding claim, wherein processing the user history records corresponding to each of the plurality of transaction authorization requests comprises filtering the user history records to remove records corresponding to transactions with a value below a predetermined threshold amount or above a predetermined threshold amount.

12. The method of any preceding claim, wherein processing the user history records corresponding to each of the plurality of transaction authorization requests comprises filtering the user history records to remove all records apart from user history records associated with payments made to a specified class of business entity.

13. A computer system for performing the method of any preceding claim, the computer system comprising:
a first communication node for receiving the plurality of transaction authorization requests;
a second communication node for communicating wirelessly with the plurality of mobile devices;
a first database having stored thereon a plurality of card-to-to-device records identifying mobile devices associated with the payment cards; and
a crowd dynamics engine configured to process the user history records corresponding to each of the plurality of transaction authorization requests to generate a characteristic of crowd dynamics based on information relating to the behaviour of the population.

14. A system for performing the method of any of claims 1-14, the system comprising:
the computer system of claim 15; and
the plurality of mobile devices.

15. A computer readable medium containing instructions which when executed cause a computer to perform a method of determining crowd dynamics of a population of mobile device users, the method comprising the steps of:
receiving a plurality of transaction authorization requests, wherein each transaction authorization request respectively identifies a payment card;
for each transaction authorization request:
identifying a mobile device associated with the payment card identified by the transaction authorization request and sending a request for location data to the mobile device;
receiving location data, from the mobile device in response to the request for location data sent to that mobile device, relating to the current location of that mobile device; and
associating the location data with the respective transaction authorization request to create a user history record;
and processing the user history records corresponding to each of the plurality of transaction authorization requests to generate a characteristic of crowd dynamics based on information relating to the behaviour of the population.
